# EUROPÄISCHE PATENTSCHRIFT

(11) **EP 0 670 959 B1**
(45) Veröffentlichungstag und Bekanntmachung des Hinweises auf die Patenterteilung: **10.06.1998**
(21) Anmeldenummer: 94906886.0
(22) Anmeldetag: 23.02.1994
(51) Int. Cl.: F02D 33/02, F02B 39/16, F02D 41/22

(54) **SCHUTZSYSTEM FÜR EINE MIT AUFLADUNG BETRIEBENE BRENNKRAFTMASCHINE**
PROTECTIVE SYSTEM FOR A SUPERCHARGED INTERNAL COMBUSTION ENGINE
SYSTEME DE PROTECTION POUR UN MOTEUR A COMBUSTION INTERNE SURALIMENTE

(30) Priorität: 30.03.1993 DE 4310261
(43) Veröffentlichungstag der Anmeldung: 13.09.1995
(73) Patentinhaber: ROBERT BOSCH GMBH, 70442 Stuttgart (DE)
(72) Erfinder: UNLAND, Stefan, D-71701 Schwieberdingen (DE); TORNO, Oskar, D-71701 Schwieberdingen (DE); HAEMING, Werner, D-74861 Neudenau (DE); ROTHHAAR, Ulrich, D-70469 Stuttgart (DE); SURJADI, Iwan, D-71665 Vaihingen/Enz (DE); HILBERT, Wolfgang, D-71696 Möglingen (DE); SLOBODA, Robert, D-71706 Markgröningen (DE); BAEUERLE, Michael, D-74354 Besigheim (DE)
(86) Internationale Anmeldenummer: DE9400182
(87) Internationale Veröffentlichungsnummer: WO9423190

(56) Entgegenhaltungen:
- US-A- 4 470 390
- US-A- 4 603 552
- PATENT ABSTRACTS OF JAPAN vol. 15, no. 182 (M-1111) 10. Mai 1991 & JP,A,03 043 644 (MITSUBISHI MOTORS CORP.) 25. Februar 1991
- PATENT ABSTRACTS OF JAPAN vol. 11, no. 123 (M-581) 17. April 1987 & JP,A,61 265 331 (NISSAN MOTOR CO LTD.) 25. November 1986
- PATENT ABSTRACTS OF JAPAN vol. 7, no. 44 (M-195) 22. Februar 1983 & JP,A,57 193 737 (TOYO KOGYO KK) 29. November 1982
- PATENT ABSTRACTS OF JAPAN vol. 9, no. 121 (M-382) 25. Mai 1985 & JP,A,60 006 029 (HONDA GIKEN KOGYO KK) 12. Januar 1985

## Beschreibung

### Stand der Technik

Die Erfindung betrifft ein Schutzsystem für eine mit Aufladung betriebene Brennkraftmaschine gemäß dem Oberbegriff des Anspruchs 1.

In der DE-OS 25 29 186 (=US-PS 4 044 560) wird eine Ladedruckregelung für eine aufgeladene Brennkraftmaschine beschrieben. Bei Überschreitung eines vorbestimmten Ladedrucks wird die gesamte Kraftstoffzufuhr der Brennkraftmaschine solange unterbrochen, bis der vorbestimmte Ladedruck wieder unterschritten ist. Die Unterbrechung der Kraftstoffzufuhr erfolgt durch Abschalten der Kraftstoffpumpe.

Weiterhin ist es aus der DE 29 28 075 A1 bekannt, zur Steuerung der Leistungsabgabe einer Brennkraftmaschine, einzelne Zylinder nach einem vorgegebenen Muster abzuschalten, wobei das Abschaltmuster so gewählt ist, daß nicht fortwährend die selben Zylinder abgeschaltet werden.

Aus den Patent Abstracts of Japan, Vol. 15, No. 182 (M-1111), 10. Mai 1991, JP-A-03 043 644 und Vol. 11, No. 123 (M-581), 17. April 1987, JP-A-61 265 331 ist ein Schutzsystem für eine mit Aufladung betriebene Brennkraftmaschine gemäß dem Oberbegriff des Anspruchs 1 bekannt. Dabei wird bei einer 1. Stufe der Überladung ein Eingriff in die Steuerung und/oder Regelung des Ladedrucks und bei einer 2. Stufe der Überladung ein Eingriff in die Kraftstoffzumessung vorgenommen.

Der Erfindung liegt die Aufgabe zugrunde, einen opimalen Schutz einer mit Aufladung betriebenen Brennkraftmaschine sicherzustellen.

### Vorteile der Erfindung

Die Erfindung hat den Vorteil, daß sie einen optimalen Schutz einer mit Aufladung betriebenen Brennkraftmaschine vor Beschädigung durch Überladung ermöglicht. Besonders vorteilhaft wirkt sich die vom Ausmaß der Überladung abhängige Staffelung verschiedener Schutzmaßnahmen aus. Dadurch wird einerseits sichergestellt, daß die jeweils getroffene Schutzmaßnahme auf das Ausmaß der Überladung abgestimmt ist und somit ein unnötig starker Drehmomentabfall vermieden wird. Andererseits läßt sich durch die unterschiedlichen Schutzmaßnahmen ein besonderes zuverlässiger Schutz der Brennkraftmaschine realisieren, der selbst dann noch greift, wenn sich beispielsweise das Stellglied für die Steuerung und/oder Regelung der Aufladung verklemmt hat.

Es wird im Hinblick auf die Aufladung der Brennkraftmaschine zwischen 3 Betriebszuständen unterschieden, und zwar Normalbetrieb, 1. Stufe der Überladung und 2. Stufe der Überladung.

Normalbetrieb liegt dann vor, wenn eine die Aufladung charakterisierende Größe unterhalb eines 1. Schwellwerts P1 liegt. Im Normalbetrieb wird die Aufladung der Brennkraftmaschine je nach Ausführungsbeispiel auf einen vorgebbaren Sollwert PSoll gesteuert und/oder geregelt.

Die 1. Stufe der Überladung liegt dann vor, wenn der 1. Schwellwert P1 der Aufladung länger als eine vorgebbare 1. Zeitspanne tlMax überschritten wurde. In diesem Fall wird ein Eingriff in die Steuerung und/oder die Regelung der Aufladung vorgenommen. Z. B. wird die Steuerung und/oder Regelung abgeschaltet und das Stellglied, das die Aufladung beeinflußt, in eine vorgebbare Position gesteuert. Das Abwarten der 1. Zeitspanne tlMax bietet den Vorteil, daß ein fälschliches Auslösen des Schutzsystems beispielsweise infolge eines Überschwingers des Regelkreises für die Aufladung oder infolge eines fehlerhaften Meßwerts weitgehend verhindert werden kann.

Die 2. Stufe der Überladung liegt dann vor, wenn die bei der 1. Stufe der Überladung eingeleitete Maßnahme zur Verringerung der Aufladung keine ausreichende Wirkung entfaltet hat, d. h. wenn ein 2. Schwellwert P2 der Aufladung länger als eine vorgebbare 2. Zeitspanne t2Max überschritten wurde. Bei der 2. Stufe der Überladung wird die Kraftstoffzumessung zu einzelnen Zylindern zunächst nach einem 1. Ausblendmuster unterbrochen. Falls diese Maßnahme nicht innerhalb einer 3. Zeitspanne t3Max dazu führt, daß der 2. Schwellwert P2 der Aufladung wieder unterschritten wird, so wird ein 2. Ausblendmuster mit höherer Ausblendhäufigkeit aktiviert. Je nach Ausführungsbeispiel können sich weitere Ausblendmuster anschließen. Das Ausblenden einzelner Zylinder hat gegenüber einer globalen Abschaltung der Kraftstoffzumessung den Vorteil, daß ein schlagartiger Drehmomentabfall vermieden wird, da über das Ausblendmuster der maximale Drehmomentabfall vorgebbar ist. Durch das Bereitstellen verschiedener Ausblendmuster wird sichergestellt, daß für die unterschiedlichsten Betriebssituationen jeweils optimale Schutzmaßnahmen zur Verfügung stehen. Die Ausblendmuster sind vorteilhafterweise so auf die Zylinderzahl abgestimmt, daß sich umlaufende Ausblendsequenzen ergeben, d. h. innerhalb kürzester Zeit wird jeder Zylinder entlastet.

Sobald die Aufladung den 2. Schwellwert P2 wieder unterschreitet, werden die Schutzmaßnahmen, die bei der 2. Stufe der Überladung getroffen wurden, wieder aufgehoben. Entsprechendes gilt für den 1. Schwellwert P1 und die 1. Stufe der Überladung.

Der 2. Schwellwert P2 der Aufladung wird aus einem von der Drezahl n der Brennkraftmaschine und der Temperatur TL der angesaugten Luft abhängigen Kennfeld ausgelesen oder mit einem Algorithmus ermittelt, in den die Drehzahl n der Brennkraftmaschine und die Temperatur TL der angesaugten Luft als Eingangsgrößen eingehen. Dadurch wird sichergestellt, daß für den gesamten Betriebsbereich der Brennkraftmaschine ein optimaler 2. Schwellwert P2 zur Verfügung steht. Da der 1. Schwellwert P1 aus dem 2. Schwellwert P2 durch Subtraktion einer Konstanten dP ermittelt wird, trifft dies auch für den 1. Schwellwert P1 zu.

Ein weiterer Vorteil der Erfindung liegt in der universellen Einsetzbarkeit. Als Größe, die die Aufladung der Brennkraftmaschine charakterisiert kann beispielsweise der Ladedruck P oder die Lufmasse oder Luftmenge L gewählt werden.

### Zeichnung

Die Erfindung wird nachstehend anhand der in der Zeichnung dargestellten Ausführungsbeispiele erläutert.

### Es zeigen

Figur 1 eine schematische Darstellung einer mit Aufladung betriebenen Brennkraftmaschine,
Figur 2 ein Diagramm für den zeitlichen Verlauf des Ladedruck-Istwerts PIst, in das die im erfindungsgemäßen Schutzsystem verwendeten Schwellwerte P1 und P2 und Zeitintervalle t1Max, t2Max und t3Max eingezeichnet sind,
Figur 3 ein Blockschaltbild des erfindungsgemäßen Schutzsystems und
Figur 4 ein Flußdiagramm zur Darstellung der Funktionsweise des erfindungsgemäßen Schutzsystems.

### Beschreibung der Ausführungsbeispiele

Das erfindungsgemäße Schutzsystem wird im folgenden an Hand von Ausführungsbeispielen beschrieben, bei denen die Aufladung der Brennkraftmaschine durch den Ladedruck P charakterisiert wird. Die Erfindung ist aber nicht auf diesen Anwendungsfall beschränkt. Wie bereits weiter oben ausgeführt, läßt sich die Aufladung der Brennkraftmaschine auch durch die angesaugte Luftmasse oder die Luftmenge L charakterisieren. In den beschriebenen Ausführungsbeispielen kann der Ladedruck P durch jede dieser Größen ersetzt werden.

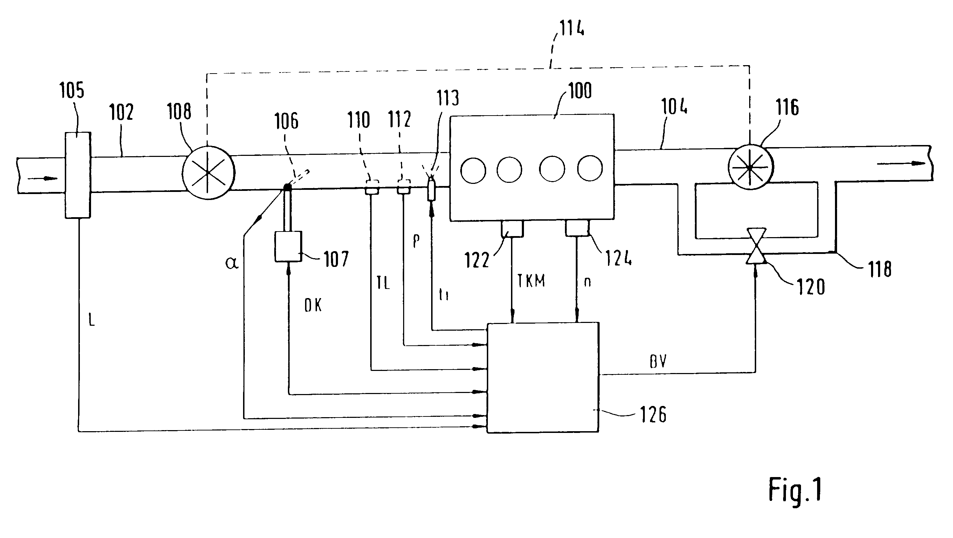

Figur 1 zeigt eine Brennkraftmaschine 100 mit einem Ansaugtrakt 102 und einem Abgaskanal 104. Im Ansaugtrakt 102 sind - in Stromrichtung der angesaugten Luft gesehen - ein Luftmengen- oder Luftmassenmesser 105, ein Verdichter 108, eine Drosselklappe 106, die mit einem Antrieb 107 verbunden ist, ein Temperatursensor 110 zur Erfassung der Temperatur TL der von der Brennkraftmaschine 100 angesaugten Luft, ein Drucksensor 112 zur Erfassung des Ladedrucks P und eine oder mehrere Einspritzdüsen 113 angeordnet. Der Verdichter 108 wird über ein Verbindungsmittel 114 von einer im Abgaskanal 104 angeordneten Turbine 116 angetrieben. Eine Bypass-Leitung 118 führt um die Turbine 116 herum. In der Bypass-Leitung 118 ist ein Bypass-Ventil 120 angeordnet. An der Brennkraftmaschine 100 sind ein Temperatursensor 122 zur Erfassung der Temperatur TKM des Kühlmittels und ein Drehzahlsensor 124 zur Erfassung der Drehzahl n der Brennkraftmaschine 100 angebracht. Sämtliche Sensoren sind mit einem zentralen Steuergerät 126 verbunden. Weiterhin ist das zentrale Steuergerät 126 mit der Drosselklappe 106, dem Antrieb 107, der Einspritzdüse bzw. den Einspritzdüsen 113 und dem Bypass-Ventil 120 verbunden.

Im einzelnen wird das Steuergerät mit folgenden Signalen beaufschlagt: Ein Signal L des Luftmengen- oder Luftmassenmessers 105 oder ein Signal P des Drucksensors 112, ein Signal von der Drosselklappe 106, ein Signal TL des Temperatursensors 110, ein Signal TKM des Temperatursensors 122 und ein Signal n des Drehzahlsensors 124. Ausgegeben werden vom Steuergerät 126 ein Signal DK an den Antrieb 107, ein Signal ti an die Einspritzdüse bzw. die Einspritzdüsen 113 und ein Signal BV an das Bypass-Ventil 120.

Das erfindungsgemäße Schutzsystem ist im Steuergerät 126 enthalten. Wenn sich aus einem oder mehreren der geschilderten Sensorsignale ergibt, daß eine Überladung der Brennkraftmaschine 100 vorliegt, so wird im Rahmen des erfindungsgemäßen Schutzsystems zunächst das Bypass-Ventil 120 in eine vorgebbare Position (z. B. vollständig geöffnet) gesteuert, so daß die Drehzahl der Turbine 116 abnimmt und anschließend, falls erforderlich, die Ansteuerung des Einspritzventils bzw. der Einspritzventile 113 derart modifiziert, daß einzelnen Zylindern kein Kraftstoff zugemessen wird.

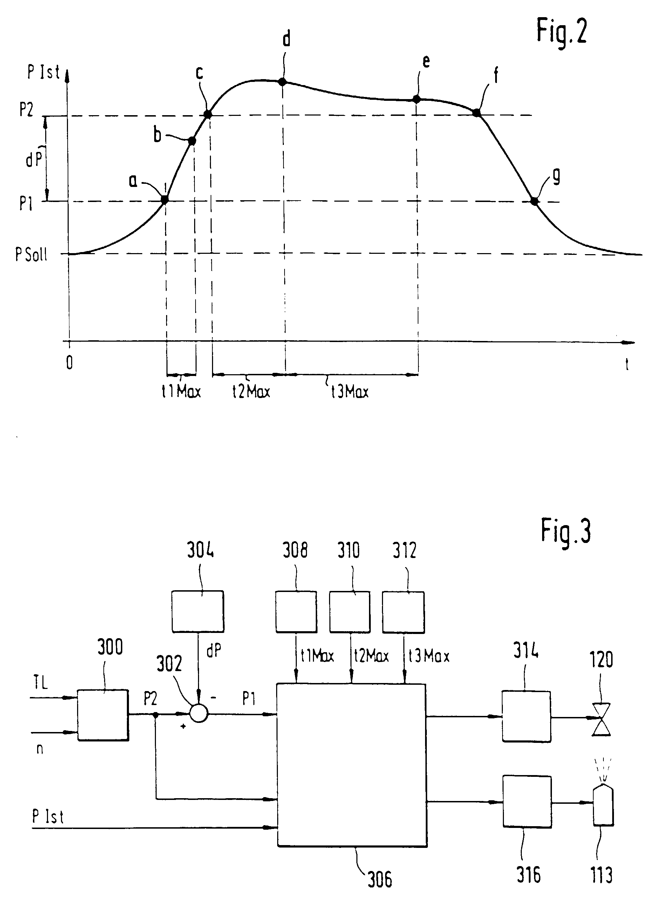

Das Diagramm in Figur 2 stellt ein Beispiel für den zeitlichen Verlauf des Istwerts PIst des Ladedrucks P dar. Auf der Abszisse ist die Zeit t aufgetragen und auf der Ordinate der Ladedruck-Istwert PIst. Der Ladedruck P kann neben anderen Größen, wie z. B. der Luftmenge oder Luftmasse L usw., zur Beurteilung des Aufladezustands der Brennkraftmaschine 100 herangezogen werden. Der Verlauf des Ladedruck-Istwerts PIst ist durch eine durchgezogene Linie dargestellt. Vertikale, gestrichelte Linien begrenzen verschiedene Zeitintervalle tlMax, t2Max und t3Max. Horizontale, gestrichelte Linien kennzeichnen den Ladedruck-Sollwert PSoll bzw. die Schwellwerte P1 und P2.

Zur Zeit t = 0 stimmt der Ladedruck-Istwert PIst mit dem Ladedruck-Sollwert PSoll überein. Anschließend steigt der Ladedruck-Istwert PIst beispielsweise infolge einer Störung in der Ladedruck-Regelung an und erreicht im Punkt a den ersten Schwellwert P1. Nach einer Zeitspanne tlMax - gemessen seit Punkt a - wird der Punkt b erreicht, bei dem der Ladedruck-Istwert PIst noch weiter oberhalb des Schwellwerts P1 liegt. In Punkt b wird als erste Schutzmaßnahme die Ladedruck-Regelung abgeschaltet, das heißt das Bypass-Ventil wird voll geöffnet. Wenn - wie im vorliegenden Fall - trotz dieser ersten Schutzmaßnahme der Ladedruck-Istwert PIst beispielsweise wegen eines defekten Bypass-Ventils 120 auch noch den Schwellwert P2 überschreitet (Punkt c), der um einen Wert dP über den Schwellwert P1 liegt, und für eine Zeitspanne t2MAx oberhalb des Schwellwertes P2 verharrt, so wird als weitere Schutzmaßnahme ein Eingriff in die Kraftstoffzumessung vorgenommen (Punkt d). Dieser Eingriff in die Kraftstoffzumessung besteht bei einer Vierzylinder-Brennkraftmaschine beispielsweise darin, daß jede fünfte Kraftstoffzumessung ausgeblendet wird. Im vorliegenden Beispiel beginnt der Ladedruck-Istwert PIst ab Punkt d zu sinken. Allerdings befindet sich der Ladedruck-Istwert PIst nach einer Zeitspanne t3Max seit Erreichen des Punktes d immer noch oberhalb des Schwellwertes P2 (Punkt e). Deshalb wird im Punkt e ein weiterer Eingriff in die Kraftstoffzumessung vorgenommen und zwar dergestalt, daß beispielsweise bei einem Vierzylindermotor jede dritte Kraftstoffzumessung ausgeblendet wird. Im vorliegenden Beispiel wird dadurch der Ladedruck-Istwert PIst weiter abgesenkt und unterschreitet in Punkt f den Schwellwert P2. In Punkt f werden sämtliche Ausblendungen der Kraftstoffzumessung wieder aufgehoben. Die Ladedruck-Regelung wird aber erst im Punkt g wieder eingeschaltet, bei dem der Ladedruck-Istwert PIst den Schwellwert P1 unterschreitet. Falls keine Störung der Ladedruck-Regelung mehr vorliegt, erreicht der Ladedruck-Istwert PIst kurze Zeit nach dem Punkt g wieder den Ladedruck-Sollwert PSoll.

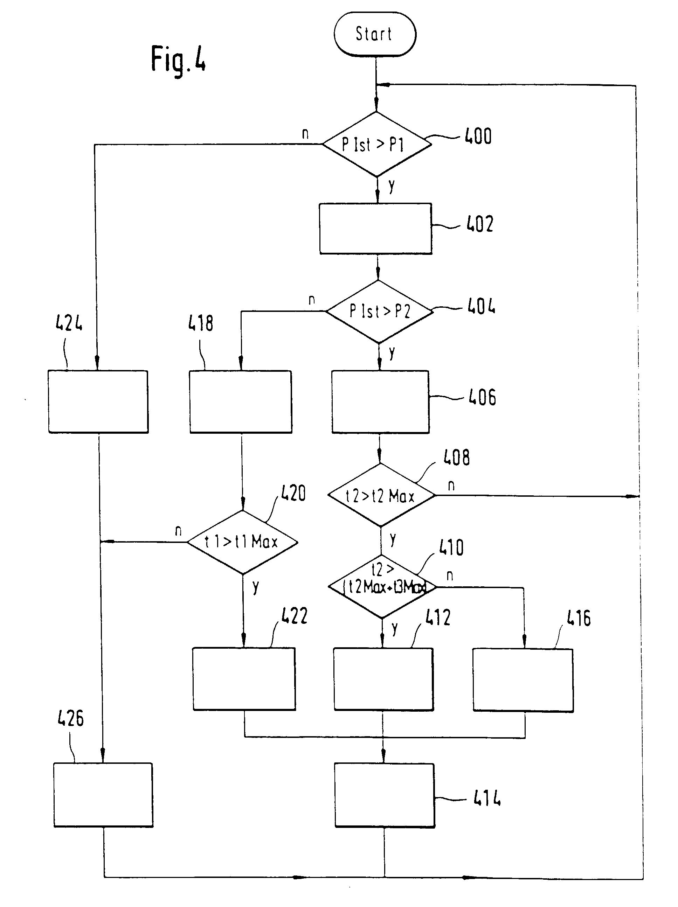

In Figur 3 ist ein Blockschaltbild des erfindungsgemäßen Schutzsystems dargestellt. Ein Kennfeld 300 ermittelt aus den Größen Ansauglufttemperatur TL und Drehzahl n der Brennkraftmaschine 100 den Schwellwert P2 und leitet diesen an einen Verknüpfungspunkt 302 weiter. Im Verknüpfungspunkt 302 wird vom Schwellwert P2 ein Wert dP subtrahiert, der aus einem Festwertspeicher 304 ausgelesen wird. Das Ergebnis der Subtraktion, der Schwellwert P1, wird an einen Eingang eines Blocks 306 weitergeleitet. An weiteren Eingängen des Blocks 306 liegen der Schwellwert P2, der Ladedruck-Istwert PIst und Werte für die Zeitintervalle t1Max, t2Max und t3Max, die von Festwertspeichern 308, 310 und 312 ausgegeben werden, an. Der Block 306 ermittelt gemäß dem im Flußdiagramm der Figur 4 dargestellten Verfahren, ob ein Eingriff in die Ladedruck-Regelung oder in die Kraftstoffzumessung zum Schutz der Brennkraftmaschine 100 erforderlich ist. Falls ein Eingriff in die Ladedruck-Regelung erforderlich ist, gibt der Block 306 ein entsprechendes Signal an die Ladedruck-Regelung 314 aus, die das Bypass-Ventils 120 ansteuert. Ist ein Eingriff in die Kraftstoffzumessung erforderlich, so gibt der Block 306 ein entsprechendes Signal an die Kraftstoffzumessung 316 aus, die die Einspritzdüse bzw. die Einspritzdüsen 113 ansteuert.

Figur 4 zeigt ein Flußdiagramm, anhand dessen die Funktionsweise des erfindungsgemäßen Schutzsystems im folgenden erläutert wird. Im ersten Schritt 400 wird abgefragt, ob der Ladedruck-Istwert PIst größer ist als der Schwellwert P1. Ist dies der Fall, so wird im darauffolgenden Schritt 402 ein Timer 1 gestartet, der eine Zeit tl mißt. Das Starten erfolgt ohne ein Zurücksetzen des Timers 1 und ein Startversuch des bereits laufenden Timers 1 hat zur Folge, daß dieser unbeeinflußt weiterläuft. Schritt 402 schließt sich ein Schritt 404 an, in dem abgefragt wird, ob der Ladedruck-Istwert PIst größer ist als der Schwellwert P2. Falls dies zutrifft, wird im darauffolgenden Schritt 406 ein Timer 2 gestartet, der eine Zeit t2 mißt. Beim Starten des Timers 2 wird genauso vorgegangen wie beim Starten des Timers 1. An Schritt 406 schließt sich ein Schritt 408 an, in dem abgefragt wird, ob seit Starten des Timers 2 mehr als eine Zeitspanne t2Max vergangen ist. Ist dies der Fall, so folgt ein Schritt 410. Im Schritt 410 wird abgefragt, ob seit Starten des Timers 2 mehr als eine Zeitspanne t2Max + t3Max vergangen ist. Trifft dies zu, so schließt sich ein Schritt 412 an, in dem die Ladedruck-Regelung ausgeschaltet wird bzw. ausgeschaltet bleibt. Weiterhin wird in Schritt 412 ein 2. Ausblendmuster der Kraftstoffzumessung aktiviert, falls dieses nicht bereits aktiv ist. An Schritt 412 schließt sich ein Schritt 414 an, in dem eine Fehlerlampe aktiviert wird, die anzeigt, daß eine Fehlfunktion der Ladedruck-Regelung vorliegt. Nach Schritt 414 beginnt der Durchlauf des Flußdiagramms von neuem mit Schritt 400.

Ist die Abfrage in Schritt 410 mit nein zu beantworten, so schließt sich an Schritt 410 ein Schritt 416 an, in dem die Ladedruck-Regelung ausgeschaltet wird, falls sie noch aktiv ist, und ein 1. Ausblendmuster der Kraftstoffzumessung aktiviert wird. Auf Schritt 416 folgt Schritt 414.

Ist die Abfrage des Schrittes 404 nicht erfüllt, so schließt sich daran ein Schritt 418 an, in dem der Timer 2 zurückgesetzt wird und das Ausblenden der Kraftstoffzumessung aufgehoben wird. Auf Schritt 418 folgt ein Schritt 420, in dem abgefragt wird, ob seit Starten des Timers 1 mehr als eine Zeitspanne tlMax vergangen ist. Ist dies der Fall, so folgt ein Schritt 422, in dem die Ladedruck-Regelung ausgeschaltet wird, falls sie noch aktiv ist. An Schritt 422 schließt sich Schritt 414 an.

Ist die Abfrage in Schritt 400 nicht erfüllt, so folgt ein Schritt 424. In Schritt 424 wird - falls nicht bereits geschehen - der Timer 1 zurückgesetzt, die Ladedruck-Regelung eingeschaltet und das Ausblenden der Kraftstoffzumessung aufgehoben. Auf Schritt 424 folgt ein Schritt 426, in dem die Fehlerlampe ausgeschaltet wird, falls diese noch eingeschaltet ist. Nach Schritt 426 beginnt der Durchlauf des Flußdiagramms von vorne mit Schritt 400. Zu Schritt 400 gelangt man auch, wenn die Abfrage in Schritt 408 nicht erfüllt ist. Auch zum Schritt 426 führt ein weiterer Pfad, nämlich ausgehend vom Schritt 420. Dieser weitere Pfad wird dann beschritten, wenn die Abfrage des Schrittes 420 nicht erfüllt ist.

Im folgenden wird die Funktionsweise des erfindungsgemäßen Schutzsystems anhand einiger typischer Durchläufe des Flußdiagramms erläutert:
1. Es liegt keine Funktionsstörung der Ladedruck-Regelung vor:
   Im Schritt 400 wird festgestellt, daß der Ladedruck-Istwert PIst kleiner ist als der Schwellwert P1 und man gelangt zum Schritt 424. Dort wird der Timer 1 zurückgesetzt, die Ladedruck-Regelung eingeschaltet und das Ausblenden der Kraftstoffzumessung aufgehoben. Diese Maßnahmen sind erforderlich, falls zuvor eine Funktionsstörung erkannt worden war und entsprechende Schutzmaßnahmen noch aktiv sind. Aus dem gleichen Grund wird im darauffolgenden Schritt 426 die Fehlerlampe ausgeschaltet, falls sie nicht ohnehin schon aus ist.
2. Die Ladedruck-Regelung ist nach fortgesetzter Überschreitung des Schwellwerts P1 auszuschalten:
   Sobald in Schritt 400 erkannt wird, daß der Schwellwert P1 überschritten ist, wird im darauffolgenden Schritt 402 der Timer 1 gestartet. Der Schwellwert P2 soll im hier beschriebenen Fall allerdings nicht überschritten sein, so daß die Abfrage des sich anschließenden Schrittes 404 nicht erfüllt ist und folglich Schritt 418 abgearbeitet wird. Dort wird der Timer 2 zurückgesetzt und falls das Ausblenden der Kraftstoffzumessung aktiv ist, wird dieses deaktiviert. Wenn im folgenden Schritt 420 festgestellt wird, daß die Zeitspanne t1 seit dem Starten des Timers 1 noch nicht größer ist als tlMax, so werden noch keine Schutzmaßnahmen ergriffen. Es schließt sich dann Schritt 426 an, in dem lediglich die Fehlerlampe ausgeschaltet wird, falls sie noch eingeschaltet ist. Befindet sich der Ladedruck-Istwert PIst aber bereits seit einer Zeitspanne tl, die größer ist als tlMax, oberhalb des Schwellwertes P1, so wird nach Schritt 420 der Schritt 422 ausgeführt, in dem die Ladedruck-Regelung ausgeschaltet wird, das heißt das Bypass-Ventil wird geöffnet. Anschließend wird in Schritt 414 die Fehlerlampe eingeschaltet um die Funktionsstörung der Ladedruck-Regelung dem Fahrer anzuzeigen.
3. Es wird für einen längeren Zeitraum ein stark überhöhter Ladedruck-Istwert PIst festgestellt, so daß es erforderlich ist, die Kraftstoffzumessung auszublenden:
   In diesem Fall gelangt man über die Schritte 400, 402, 404, 406 und 408 zum Schritt 410. In Schritt 410 wird festgestellt, ob der erhöhte Ladedruck schon so lange vorliegt, daß ein Ausblenden der Kraftstoffzumessung gemäß dem 2. Ausblendmuster erforderlich ist (Schritt 412) oder ob zunächst ein Ausblenden der Kraftstoffzumessung gemäß dem 1. Ausblendmuster genügt (Schritt 416). In beiden Fällen wird die Ladedruck-Regelung ausgeschaltet, falls sie nicht ohnehin bereits aus ist und anschließend die Kraftstoffzumessung mit dem entsprechenden Ausblendmuster beaufschlagt. Sowohl an Schritt 412 als auch an Schritt 416 schließt sich Schritt 414 an, in dem die Fehlerlampe eingeschaltet wird, falls sie bislang ausgeschaltet war.

Die Ausblendmuster für die Kraftsoffzumessung sind abhängig von der Zylinderzahl der Brennkraftmaschine 100 vorgebbar. Außerdem wird bei der Vorgabe der Ausblendmuster berücksichtigt, wie groß der maximale Drehmomentabfall bei Aktivierung der Ausblendung sein darf. Im folgenden sind Beispielwerte für das 1. und das 2. Ausblendmuster für Brennkraftmaschinen mit 4, 5, 6 und 8 Zylindern aufgelistet. Die aufgelisteten Ausblendmuster verursachen einen maximalen Drehmomentabfall von ungefähr 15 % gemessen vom Regulärbetrieb zum 1. Ausblendmuster bzw. vom 1. zum 2. Ausblendmuster.

| Ausgeblendete Zylinder beim | | |
|---|---|---|
| Zylinderzahl | 1. Ausblendmuster | 2. Ausblenmuster |
| 4 | jeder 5. | jeder 3. |
| 5 | jeder 6. | jeder 4. |
| 6 | jeder 5. | jeder 5. + jeder darauffolgende |
| 8 | jeder 5. | jeder 3. |

Um ein irrtümliches Ansprechen des Schutzsystems möglichst auszuschließen, werden sämtliche Schutzmaßnahmen (Abschalten der Ladedruck-Regelung, Ausblenden der Kraftstoffzumessung gemäß dem 1. oder 2. Ausblendmuster) erst dann eingeleitet, wenn die Schwellwerte P1 bzw. P2 für den Ladedruck länger als vorgegebbare Zeitspannen t1Max, t2Max bzw. t2Max + t3Max überschritten sind. Beim Zurücknehmen der Schutzmaßnahmen (Schritte 418 und 424 des Flußdiagramms von Figur 4) werden diese Zeitspannen allerdings nicht beachtet, sondern das Zurücknehmen erfolgt unmittelbar nachdem die betreffenden Schwellwerte unterschritten wurden.

In einem vorteilhaften Ausführungsbeispiel ist eine weitere Sicherung gegen ein irrtümliches Ansprechen des Schutzsystems vorgesehen. Es wird überprüft, ob der Sensor 112 zur Erfassung des Ladedrucks P einwandfrei arbeitet. Die beschriebenen Schutzmaßnahmen werden nur dann eingeleitet, wenn eine Funktionsstörung des Sensors 112 ausgeschlossen werden kann.

In einem weiteren Ausführungsbeispiel entfällt das in Figur 3 dargestellte Kennfeld 300. Stattdessen wird der Schwellwert P2 mit einem Algorithmus aus den Eingangsgrößen Drehzahl n der Brennkraftmaschine 100 und Temperatur TL der angesaugten Luft ermittelt.

## Patentansprüche

1. Schutzsystem für eine mit Aufladung betriebene Brennkraftmaschine (100), wobei
- bei Normalbetrieb eine Steuerung und/oder Regelung einer die Aufladung charakterisierenden Größe (P) auf einen vorgebbaren Sollwert (PSoll) erfolgt,
- bei einer 1. Stufe der Überladung ein Eingriff in die Steuerung und/oder Regelung der die Aufladung charakterisierenden Größe (P) vorgenommen wird und
- bei einer 2. Stufe der Überladung ein Eingriff in die Kraftstoffzumessung vorgenommen wird, dadurch gekennzeichnet,
-- daß die 1. Stufe der Überladung dann vorliegt, wenn ein 1. Schwellwert (P1) für eine die Aufladung der Brennkraftmaschine (100) charakterisierende Größe (P) eine vorgebbare 1. Zeitspanne (tlMax) lang überschritten wurde und die 2. Stufe der Überladung dann vorliegt, wenn ein 2. Schwellwert (P2) für die die Aufladung der Brennkraftmaschine (100) charakterisierende Größe (P) eine vorgebbare 2. Zeitspanne (t2Max) lang überschritten wurde,
-- daß der Eingriff in die Kraftstoffzumessung durch Ausblenden einzelner Zylinder nach wenigstens einem vorgebbaren Ausblendmuster vorgenommen wird,
-- daß ein 1. Ausblendmuster unmittelbar nach Erreichen der

2. Stufe der Überladung aktiviert wird und
-- falls die die Aufladung charakterisierende Größe (P) daraufhin nicht innerhalb einer vorgebbaren 3. Zeitspanne (t3Max) den 2. Schwellwert (P2) unterschreitet, wenigstens ein weiteres Ausblendmuster mit höherer Ausblendhäufigkeit aktiviert wird.
2. Schutzsystem nach Anspruch 1, dadurch gekennzeichnet, daß die 1. oder 2. Stufe der Überladung nur dann vorliegt, wenn eine Fehlfunktion des Sensors (112) zur Erfassung der die Aufladung charakterisierende Größe (P) ausgeschlossen werden kann.

3. Schutzsystem nach einem der vorhergehenden Ansprüche, dadurch gekennzeichnet, daß beim Eingriff in die Steuerung und/oder Regelung der Aufladung die Steuerung und/oder Regelung der Aufladung abgeschaltet wird und ein die Aufladung beeinflussendes Stellglied (120) in eine vorgebbare Position gesteuert wird.

4. Schutzsystem nach einem der vorhergehenden Ansprüche, dadurch gekennzeichnet, daß die Ausblendmuster so auf die Zylinderzahl der Brennkraftmaschine (100) abgestimmt sind, daß nach und nach alle Zylinder an der Ausblendung teilnehmen und ein vorgebbarer Wert für den durch die Ausblendung verursachten Drehmomentabfall nicht überschritten wird.

5. Schutzsystem nach einem der Ansprüche 1 bis 4, dadurch gekennzeichnet, daß unmittelbar nach Unterschreiten der für die einzelnen Stufen der Überladung vorgebbaren Schwellwerte (P1, P2) die der jeweiligen Stufe der Überladung zugeordnete Schutzmaßnahme aufgehoben wird.

6. Schutzsystem nach einem der Ansprüche 1 bis 5, dadurch gekennzeichnet, daß der 2. Schwellwert (P2) der Aufladung aus einem von der Drehzahl (n) der Brennkraftmaschine (100) und der Temperatur (TL) der angesaugten Luft abhängigen Kennfeld (300) ausgelesen wird oder mit einem Algorithmus ermittelt wird, in den die Drehzahl (n) der Brennkraftmaschine (100) und die Temperatur (TL) der angesaugten Luft als Eingangsgrößen eingehen.

7. Schutzsystem nach einem der Ansprüche 1 bis 6, dadurch gekennzeichnet, daß der 1. Schwellwert (P1) der Aufladung aus dem 2. Schwellwert (P2) der Aufladung durch Subtraktion einer Konstanten (dP) ermittelt wird.

8. Schutzsystem nach einem der vorhergehenden Ansprüche, dadurch gekennzeichnet, daß es sich bei der die Aufladung der Brennkraftmaschine charakterisierenden Größe um den Ladedruck (P) oder die Luftmasse oder Luftmenge (L) handelt.

## Claims

1. Protection system for a pressure-charged internal combustion engine (100), where
- in normal operation control and/or regulation of a variable (P) which characterizes the pressure-charging to a specifiable desired value (PSoll) is carried out,
- in a first stage of overboosting, an intervention into the control and/or regulation of the variable (P) which characterizes the pressure-charging is performed and,
- in a second stage of overboosting, an intervention into the fuel metering is performed, characterized
-- in that the first stage of overboosting exists when a first threshold value (P1) for a variable (P) which characterizes the pressure-charging of the internal combustion engine (100) has been exceeded for a predeterminable first time period (tlMax) and the second stage of overboosting exists when a second threshold value (P2) for the variable (P) which characterizes the pressure-charging of the internal combustion engine (100) has been exceeded for a predeterminable second time period (t2Max),
-- in that the intervention into the fuel metering is performed by skipping individual cylinders in accordance with at least one specifiable skip pattern,
-- in that a first skip pattern is activated immediately after the second stage of the overboosting is reached and
-- if the variable (P) which characterizes the pressure-charging does not then undershoot the second threshold value (P2) within a predeterminable third time period (t3Max), at least one further skip pattern with a higher skip frequency is activated.

2. Protection system according to Claim 1, characterized in that the first or second stage of overboosting exists only if a malfunction of the sensor (112) for recording the variable (P) which characterizes the pressure-charging can be excluded.

3. Protection system according to one of the preceding claims, characterized in that when the intervention into the control and/or regulation of the pressure-charging is made, the control and/or regulation of the pressure-charging is switched off and a control element (120) which influences the pressure-charging is adjusted to a predeterminable position.

4. Protection system according to one of the preceding claims, characterized in that the skip pattern is matched to the number of cylinders of the internal combustion engine (100) in such a way that all the cylinders participate progressively in the skipping and a predeterminable value for the torque drop caused by the skipping is not exceeded.

5. Protection system according to one of Claims 1 to 4, characterized in that immediately after the threshold values (P1, P2) specifiable for the individual stages of overboosting are undershot, the protective measure assigned to the respective stage of overboosting is cancelled.

6. Protection system according to one of Claims 1 to 5, characterized in that the second threshold value (P2) for the pressure-charging is read out from a characteristic map (300) dependent on the speed (n) of the internal combustion engine (100) and the temperature (TL) of the induced air or is determined by means of an algorithm into which the speed (n) of the internal combustion engine (100) and the temperature (TL) of the induced air enter as input variables.

7. Protection system according to one of Claims 1 to 6, characterized in that the first threshold value (P1) for the pressure-charging is determined from the second threshold value (P2) for the pressure-charging by subtraction of a constant (dP).

8. Protection system according to one of the preceding claims, characterized in that the variable which characterizes the pressure-charging of the internal combustion engine is the boost pressure (P) or the air mass or air flow rate (L).

## Revendications

1. Système de protection pour un moteur à combustion interne (100) suralimenté, dans lequel
- en marche normale, il se produit un réglage et/ou une régulation d'une grandeur (P) caractérisant la suralimentation sur une valeur de consigne (PSoll) prévisible,
- à un premier degré de suralimentation excessive, une intervention dans le réglage et/ou la régulation de la grandeur (P) caractérisant la suralimentation est opérée, et
- à un second degré de suralimentation excessive, une intervention dans le dosage du carburant est opérée,
caractérisé
-- en ce que le premier degré de suralimentation excessive existe lorsqu'un premier seuil (P1) pour une grandeur (P) caractérisant la suralimentation du moteur à combustion interne (100) a été dépassé pendant un premier laps de temps (t1Max) prévisible et le second degré de suralimentation excessive existe lorsqu'un second seuil (P2) pour la grandeur (P) caractérisant la suralimentation du moteur à combustion interne (100) a été dépassé pendant un deuxième laps de temps (t2Max) prévisible,
-- en ce que l'intervention dans le dosage du carburant est opérée par masquage de certains cylindres suivant au moins un schéma de masquage prévisible,
-- en ce qu'un premier schéma de masquage est activé immédiatement après que le second degré de suralimentation excessive ait été atteint, et
-- au moins un autre schéma de masquage avec une fréquence de masquage plus élevée est activé, dans le cas où la grandeur (P) caractérisant la suralimentation ne redescend pas ensuite en dessous du second seuil (P2) dans un troisième laps de temps (t3Max) prévisible.

2. Système de protection suivant la revendication 1, caractérisé en ce que le premier ou le second degré de suralimentation excessive n'existe que lorsqu'un fonctionnement défectueux du capteur (112) pour la détermination de la grandeur (P) caractérisant la suralimentation peut être exclu.

3. Système de protection suivant l'une quelconque des revendications précédentes, caractérisé en ce que, lors de l'intervention dans le réglage et/ou la régulation de la suralimentation, le réglage et/ou la régulation de la suralimentation est arrêté(e) et un organe de réglage (120) influençant la suralimentation est amené dans une position prévisible.

4. Système de protection suivant l'une quelconque des revendications précédentes, caractérisé en ce que les schémas de masquage sont adaptés au nombre de cylindres du moteur à combustion interne (100), d'une façon telle que tous les cylindres participent l'un après l'autre au masquage et qu'une valeur prévisible pour la baisse du couple moteur causée par le masquage ne soit pas dépassée.

5. Système de protection suivant l'une quelconque des revendications 1 à 4, caractérisé en ce que la mesure de protection associée respectivement à un degré de suralimentation excessive est levée immédiatement après que l'on soit redescendu en dessous des seuils prévisibles (P1, P2) pour les divers degrés de suralimentation excessive.

6. Système de protection suivant l'une quelconque des revendications 1 à 5, caractérisé en ce que le second seuil (P2) de la suralimentation est lu dans un diagramme caractéristique (300) dépendant de la vitesse de rotation (n) du moteur à combustion interne (100) et de la température (TL) de l'air aspiré, ou est déterminé avec un algorithme dans lequel entrent la vitesse de rotation (n) du moteur à combustion interne (100) et la température (TL) de l'air aspiré comme grandeurs d'entrée.

7. Système de protection suivant l'une quelconque des revendications 1 à 6, caractérisé en ce que le premier seuil (P1) de la suralimentation est déduit du second seuil (P2) de la suralimentation par soustraction d'une constante (dP).

8. Système de protection suivant l'une quelconque des revendications précédentes, caractérisé en ce qu'il s'agit, en ce qui concerne la grandeur caractérisant la suralimentation du moteur à combustion interne, de la pression d'admission (P) ou de la masse ou du débit d'air (L).
